# EUROPÄISCHE PATENTSCHRIFT

(11) **EP 1 079 993 B1**
(45) Veröffentlichungstag und Bekanntmachung des Hinweises auf die Patenterteilung: **24.07.2002**
(21) Anmeldenummer: 99929092.7
(22) Anmeldetag: 03.05.1999
(51) Int. Cl.: B60R 21/00, G01R 31/28

(54) **VERFAHREN UND VORRICHTUNG ZUR ÜBERPRÜFUNG EINES ELEKTRISCHEN SCHALTKREISES, INSBESONDERE EINES ZÜNDSCHALTKREISES EINES KRAFTFAHRZEUG-INSASSENSCHUTZSYSTEMS**
METHOD AND DEVICE FOR CHECKING AN ELECTRIC CIRCUIT, ESPECIALLY AN IGNITION CIRCUIT OF A MOTOR VEHICLE OCCUPANT PROTECTION SYSTEM
PROCEDE ET DISPOSITIF POUR VERIFIER UN CIRCUIT ELECTRIQUE, NOTAMMENT LE CIRCUIT D'ALLUMAGE D'UN SYSTEME DE PROTECTION DES OCCUPANTS D'UNE AUTOMOBILE

(30) Priorität: 20.05.1998 DE 19822780
(43) Veröffentlichungstag der Anmeldung: 07.03.2001
(73) Patentinhaber: SIEMENS AKTIENGESELLSCHAFT, 80333 München (DE)
(72) Erfinder: HERMANN, Stefan, D-93096 Köfering (DE); KÖPPL, Michael, D-93161 Sinzing (DE)
(86) Internationale Anmeldenummer: DE9901317
(87) Internationale Veröffentlichungsnummer: WO9959843

(56) Entgegenhaltungen:
- EP-A- 0 752 592
- WO-A-97/29932
- DE-A- 19 532 628
- DE-C- 19 731 717
- PATENT ABSTRACTS OF JAPAN vol. 095, no. 008, 29. September 1995 (1995-09-29) & JP 07 132794 A (FUJITSU TEN LTD), 23. Mai 1995 (1995-05-23)

## Beschreibung

Verfahren und Vorrichtung zur Überprüfung eines elektrischen Schaltkreises, insbesondere eines Zündschaltkreises eines Kraftfahrzeug-Insassenschutzsystems

Die Erfindung betrifft ein Verfahren und eine Vorrichtung zur Überprüfung eines elektrischen Schaltkreises, der bei Auftreten bestimmter Bedingungen sehr rasch reagieren soll, insbesondere eines Zündschaltkreises eines Kraftfahrzeug-Insassenschutzsystems.

Beispielsweise muß bei einem Kraftfahrzeug-Insassenschutzsystem die Zündpille oder Zündpillen bei Erfassung eines Unfalls sehr rasch zur zeitgerechten Auslösung der Insassenschutzvorrichtung, z. B. eines Airbags oder eines Gurtstraffers, aktiviert werden. Hierzu werden mit der Zündpille in Reihe geschaltete Schalter eingeschaltet, so daß durch die Zündpille ein starker, die Auslösung triggernder Strom fließt. Aus Sicherheitsgründen wird die Funktionsfähigkeit dieser Schalter beim Einschalten des Systems, beispielsweise beim Starten des Kraftfahrzeugmotors oder beim Initialisieren des Insassenschutzsystem-Steuergeräts, getestet. Die mit der Zündpille verbundenen Schalter werden einzeln nacheinander durchgeschaltet und es wird die am Schalterausgang auftretende Potentialänderung zur Überprüfung der Schalterfunktionsfähigkeit erfaßt und ausgewertet. Durch die aufeinanderfolgende Durchschaltung der mit der Zündpille verbundenen Schalter wird ein unbeabsichtigtes Auslösen der Zündpille während dieses Schaltertest verhindert, da ein durch die Zündpille fließender Stromfluß durch den gerade nicht getesteten und deshalb offenen Schalter gesperrt wird. Zum Zeitpunkt der Schalterüberprüfung ist nämlich der als Energiequelle für die Zündpille dienende Energiespeicherkondensator üblicherweise bereits vollständig aufgeladen, so daß die Zündpille bei gleichzeitigem Schließen des zu testenden Schalters und des weiteren im Zünd-Schaltkreis vorhandenen, elektrisch steuerbaren Schalters oder mechanischen Beschleunigungsschalters ausgelöst würde.

Sollte jedoch im Zündschaltkreis ein Leckwiderstand (gegen Massepotential und/oder Versorgungsspannung oder dem Zündkondensator) vorhanden sein, könnte die Zündpille bei Schließen eines Schalters während des Schaltertests dennoch zünden, da dann die Gefahr eines zu hohen Stromflusses besteht.

Zur Vermeidung solcher fehlerhaften Zündungen wird in der Regel vor dem Schaltertest eine Leckmessung durchgeführt, bei der die Größe eines in dem Schaltkreis gegebenenfalls fließenden Leckstroms gemessen wird. Bei Erfassung eines hohen Leckstroms wird die Schalterüberprüfung gesperrt. Durch diese Leckstrommessung läßt sich ermitteln, ob an der Zündpille ein Ableitwiderstand oder ein Kurzschluß vorhanden ist.

Eine solche Leckmessung ist in größeren Einzelheiten in der DE 44 22 264 A offenbart. Gemäß dieser Druckschrift wird bei der Leckstrommessung ein Alarmsignal erzeugt, wenn der Leckstrom einen bestimmten Wert erreicht oder überschreitet.

Die Leckstrommessung wird hierbei in mehr oder weniger großem zeitlichen Abstand vor einer gegebenenfalls zyklisch wiederholten Schalterüberprüfung durchgeführt. Allerdings können sich auch nach Durchführung einer keine Probleme aufzeigenden Leckmessung dennoch nachträglich Leckwiderstände beispielsweise aufgrund von sehr starken Temperatureinwirkungen, Veränderungen einzelner Schaltelemente, Verunreinigungen oder dergleichen bilden. Wenn nach Bildung eines solchen, neu aufgetretenen Leckwiderstandes eine Schalterüberprüfung durchgeführt wird, besteht die Gefahr, daß es zur unerwünschten Auslösung der Zündpille kommt. Dieses Problem unerwünschter Aktivierung stellt sich nicht nur im Fall von Zündpillen, sondern auch bei anders gearteten, im Notfall oder bei bestimmten Bedingungen zu aktivierenden Schaltungselementen, z. B. Sicherungen, die ein automatisches Zerstören des Schaltkreises bei Auftreten der bestimmten Bedingungen bewirken sollen.

EP 0 752 592 A2 zeigt ein Verfahren gemäß dem Oberbegriff des Patentanspruchs 1 sowie eine Vorrichtung gemäß dem Oberbegriff des Patentanspruchs 3. Der Schaltkreis enthält eine zwischen zwei Schaltern liegenden Zündpille. Parallel zu den - Schaltern sind hochohmige Stromquellen geschaltet. Zum Testen der Schalter werden der jeweils zu testende Schalter und die auf der hiervon abgewandten Seite der Zündpille liegende hochohmige Stromquelle eingeschaltet, die den durch den Schalter fließenden Strom auf einen geringen, keine Zündauslösung bewirkenden Stromwert begrenzt. Vor einer Schalterüberprüfung wird eine Isolationsüberprüfung durchgeführt, damit bei der nachfolgenden Schalterüberprüfung ein durch Isolationsfehler hervorgerufener, zu hoher Strom vermieden werden kann.

In "Elektronik Praxis", Nr. 20, 21. Oktober 1997, Seite 126, ist angegeben, bei dem Test eines Airbag-Zünders den Meßstrom zu begrenzen. Weiterhin wird der Isolationswiderstand zwischen dem Zündelement und dem dieses umgebenden Gehäuse gemessen.

Aus den "Patent Abstracts of Japan ", Vol. 095, No. 008, 29.09.1995 ist bezugnahmend auf JP 07 132794 A eine Zündkreisvorrichtung zum Aktivieren einer Airbags bekannt. Dabei ist eine Energiequelle mit einer Serienschaltung aus einem Transistor, einem Zündschaltungselement und einem Sicherheitsschalter verbunden. Der Transistor kann nur getestet werden, wenn der Sicherheitsschalter geöffnet ist. Im Testfall wird der Transistor durchgeschaltet und ein Spannungswert an einem Anschluß zwischen Transistor und Zündschaltungselement gemessen. Zum Durchschalten des Transistors wird dessen Basis mit einem Steuerspannungswert beaufschlagt der von einem über einen weiteren Transistor aktivierbaren Spannungsteiler geliefert wird.

Der Erfindung liegt die Aufgabe zugrunde, ein Verfahren und eine Vorrichtung zur Überprüfung von elektrischen Schaltkreisen zu schaffen, die eine zuverlässige, einfach durchführbare Transistorüberprüfung ohne Gefahr von unerwünschten Aktivierungen des aktivierbaren Schaltungselements ermöglichen.

Diese Aufgabe wird hinsichtlich des Verfahrens mit den im Patentanspruch 1 genannten Maßnahmen, und im Hinblick auf die Vorrichtung mit den im Patentanspruch 3 angegebenen Merkmalen gelöst.

Bei der Erfindung wird die Gatespannung des als Schalter vorgesehenen Transistors so begrenzt, daß der Transistor nicht voll durchschalten kann und damit selbsttätig den durch ihn fließenden Strom auf einen unkritischen Wert begrenzt, der zur Auslösung des aktivierbaren Schaltungselements nicht ausreichend ist, jedoch gleichwohl eine zuverlässige Detektion des Schaltverhaltens des Transistors ermöglicht. Bei dieser Lösung ist keine separate Stromquelle erforderlich. Ferner können in einem Fall, bei dem der zu testende Schalter durch eine Vielzahl von parallel geschalteten Transistoren gebildet ist, alle diese Transistoren gemeinsam überprüft werden. Hierbei können auch alle Gateelektroden aller Transistoren direkt miteinander verbunden sein und müssen nicht selektiv adressierbar sein. Durch die Überwachung der am Transistorausgang auftretenden Potentialveränderung kann die Transistorüberprüfung ggf. auch ohne nennenswerten Stromfluß und damit im wesentlichen verlustfrei erfolgen.

Auf Grund der Strombegrenzung während des Schaltertests kann eine vorgeschaltete Leckstrommessung gegebenenfalls entfallen. Vorzugsweise wird gleichwohl eine solche Leckstrommessung vor oder nach dem Schaltertest durchgeführt, damit das Schaltverhalten des Schaltkreises im Ernstfall besser abgeschätzt werden kann.

Die Erfindung kommt vorzugsweise bei einem Kraftfahrzeug-Insassenschutzsystem, insbesondere einem Airbagsystem oder Gurtstraffersystem oder dergleichen, zum Einsatz und dient in diesem Fall vorrangig zur Überprüfung der Funktionsfähigkeit und des Schaltverhaltens der mit der oder den Zündpillen verbundenen Schalter, die bei einem (drohenden oder tatsächlich stattgefundenen) Unfall zur Zündung des Insassenschutzsystems geschlossen werden. Die Erfindung ist aber auch allgemein zum Testen von anders gearteten Schaltkreisen mit einem unter bestimmten Umständen zu aktivierenden und einen nicht reversiblen Prozeß auslösenden Schaltungselement, beispielsweise einer Sicherung, einsetzbar.

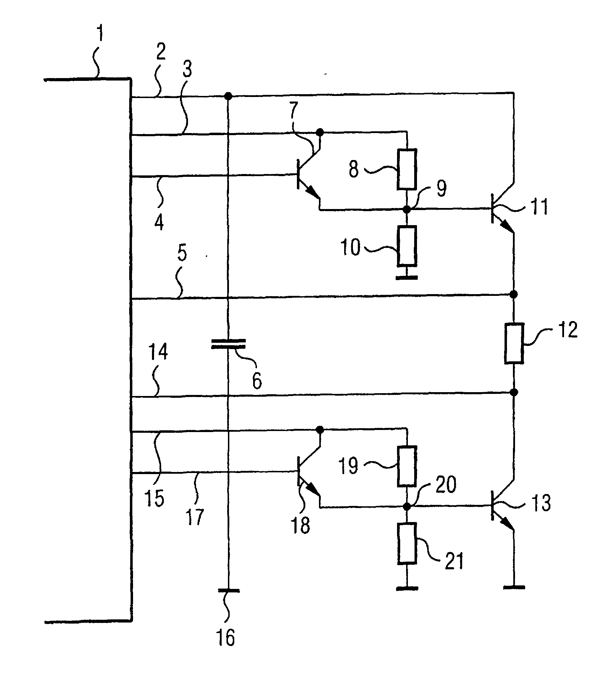

Die Erfindung wird nachstehend anhand eines Ausführungsbeispiels unter Bezugnahme auf die einzige Zeichnung näher beschrieben, in der der Auslöse- und Testabschnitt eines Kraftfahrzeug-Airbagsystems näher dargestellt ist.

Eine Steuereinrichtung (Steuergerät) 1 ist in an sich bekannter Weise mit dem Bordnetz zur Spannungsspeisung sowie mit Unfallsensoren zur Erfassung eines Unfalls, z. B. eines Aufpralls, eines Überschlags oder einer unnatürlich hohen Verzögerung/Beschleunigung verbunden. Die Steuereinrichtung 1 erzeugt während des Kraftfahrzeugbetriebs auf einer Leitung 2 eine konstante Gleichspannung von beispielsweise 12 bis 13 V, die unter anderem zur Aufladung eines zwischen die Leitung 2 und Schaltungsbezugspotential (Massepotential) 16 geschalteten Energiespeicherkondensators 6 dient. Parallel zum Energiespeicherkondensator 6 ist eine Reihenschaltung aus einem ersten steuerbaren Schalter 11 in Form eines Transistors (insbesondere Feldeffekttransistors), einer den Airbag-Gasgenerator zündenden Zündpille 12 und einem weiteren, elektrisch steuerbaren Schalter 13 in Form eines Transistors (insbesondere FET) geschaltet. Bei Erfassung eines Unfalls erzeugt die Steuereinrichtung 1 Steuersignale zur gleichzeitigen Durchschaltung der Schalter 11 und 13, so daß die Zündpille 12 von einem starken, die sofortige Zündung bewirkenden Strom in der Größenordnung von beispielsweise 2 bis 4 A durchflossen wird. Der maximale Strom bei der Zündung kann hierbei auf Werte von beispielsweise unter 4 A begrenzt sein, damit die im Energiespeicherkondensator 6 vorhandene Energie und/oder die von der Steuereinrichtung 1 über die Leitung 2 abgegebene Leistung auch zur Zündung weiterer, nicht gezeigter, parallel geschalteter Zündpillen ausreicht. Diese Strombegrenzung kann durch nicht gezeigte Strombegrenzungselemente erzielt werden, die in der Steuereinrichtung 1 und/oder zwischen dem Energiespeicherkondensator 6 und der oder den Zündpillen 12 angeordnet sind.

Zur Überprüfung der Funktionsfähigkeit des Zündschaltkreises werden die mit der Zündpille 12 verbundenen Schalter 11 und 13 zeitlich versetzt einem Funktionstest unterzogen. Dieser Funktionstest kann bei der Einschaltung der Kraftfahrzeug-Zündung und/oder in regelmäßigen oder unregelmäßigen Intervallen während des Kraftfahrzeugbetriebs durchgeführt werden. Zum Testen der Funktionsfähigkeit des Schalters 11 erzeugt die Steuereinrichtung 1 auf einer Leitung 3 ein Spannungssignal mit einer Amplitude, die zum vollständigen Durchschalten des Transistors 11 ausreichend ist und beispielsweise einen Wert von 1 bis 3 V besitzt. Diese Spannung wird an einen Widerstandsspannungsteiler mit Widerständen 8 und 10 angelegt, die zwischen die Leitung 3 und Massepotential geschaltet sind. Der Verbindungspunkt 9 zwischen den Widerständen 8 und 10 ist mit dem Gate des Transistors 11 verbunden, so daß die durch die Widerstandsteilung verringerte Spannung an das Gate des Transistors 11 angelegt wird. Das Teilerverhältnis der Widerstände 8 und 10 ist so festgelegt, daß die am Verbindungspunkt 9 auftretende Spannung einen niedrigen Wert aufweist, der nicht zum vollständigen Durchsteuern des Transistors 11 ausreicht. Der Transistor 11 wirkt somit wie ein relativ großer Widerstand, der den durch den Transistor 11 und damit den zur Zündpille 12 fließenden Strom auf einen zur Zündung bei weitem nicht ausreichenden Wert von beispielsweise weniger als 500 mA, vorzugsweise von etwa oder weniger als 160 mA begrenzt. Im Normalfall ist der Schalter 13 während dieses Schaltertest geöffnet, so daß normalerweise kein nennenswerter Strom fließt. Wenn jedoch ein Leck aufgetreten sein sollte und der nicht mit dem Schalter 11 verbundene, andere Anschluß der Zündpille 12 aufgrund eines Funktionsfehlers, eines Kurzschlusses oder dergleichen mit Massepotential verbunden sein sollte, wird durch die Strombegrenzung des Schalterteststroms zuverlässig gewährleistet, daß auch in solchen Fällen eine Zündung der Zündpille 12 mit Sicherheit unterbleibt.

Parallel zum Widerstand 8 ist ein Schalttransistor 7 geschaltet, der von der Steuereinrichtung 1 über eine Gateleitung 4 gesteuert wird. Wenn die Steuereinrichtung 1 die Notwendigkeit der Auslösung des Insassenschutzsystems aufgrund eines Unfalls erfaßt, legt sie die Leitungen 3 und 4 gleichzeitig auf hohes Potential, so daß der Schalttransistor 7 durchschaltet und damit den Widerstand 8 kurzschließt. Damit wird die volle, auf der Leitung 3 anliegende Spannung an das Gate des Transistors 11 angelegt, so daß dieser vollständig durchschaltet, d. h. keine Strombegrenzungsfunktion ausübt. Da zugleich auch der Schalter 13 vollständig durchgeschaltet wird, fließt durch die Zündpille 12 ein starker Strom, der eine sofortige Zündung bewirkt.

Der Schalttransistor 7 kann gegebenenfalls auch entfallen. In diesem Fall wird die Leitung 4 direkt mit dem Verbindungspunkt 9 verbunden und bei Erfassung eines Unfalls mit einer zur vollen Durchsteuerung des Transistors 11 ausreichenden Spannung beaufschlagt. In diesem Fall ist es nicht notwendig, bei Erfassung eines Unfalls zugleich auch die Leitung 3 auf hohes Potential zu legen. Der Widerstandwert der Widerstände 8 und 10 ist ausreichend hoch gewählt, so daß der durch diese Widerstände fließende Stromfluß sehr gering bis vernachlässigbar ist.

Als weitere Alternative kann zwischen das Gate des Transistors 11 und die Leitung 3 eine Zenerdiode anstelle des Widerstands 8 geschaltet sein, durch die am Gate des Transistors 11 während eines Schaltertests auftretende Spannung auf einen zur vollständigen Durchschaltung nicht ausreichenden Wert herabgesetzt wird. Parallel zu dieser Zenerdiode ist in diesem Fall der Schalttransistor 7 geschaltet, der bei beabsichtigter Zündung der Zündpille 12 durchgeschaltet wird und damit die Zenerdiode kurzschließt, so daß die volle Gatespannung an den Transistor 11 angelegt wird.

Mit dem Verbindungspunkt zwischen dem Schalter 11 und der Zündpille 12 ist eine Leitung 5 verbunden, die zur Steuereinrichtung 1 führt und die Überwachung der an diesem Verbindungspunkt während des Schaltertests auftretenden Potentialveränderung ermöglicht. Bei korrektem Schalten des Transistors 11 steigt das Potential an diesem Verbindungspunkt während des Schaltertests in etwa auf den Spannungswert der Leitung 2 an, während bei fehlerhafter Schaltfunktion die Spannung auf der Leitung 5 zu niedrig bleibt. Damit kann die Steuereinrichtung 1 die Funktion und gegebenenfalls auch das Zeitverhalten des Schalters 11 überprüfen.

Die Leitung 5 kann zugleich auch zur Durchführung einer Leckmessung eingesetzt werden, die bei Initialisierung der Steuereinrichtung 1 oder zu einem geeigneten anderen Zeitpunkt ausgeführt wird. Hierbei kann die Steuereinrichtung 1 beispielsweise eine bestimmte Spannung auf die Leitung 5 aufprägen und den auf der Leitung 5 fließenden Strom messen, der im leckfreien Zustand aufgrund der geöffneten Schalter 11 und 13 bei Null liegen sollte.

Die vorstehenden Ausführungen bezüglich des Schaltertests des Transistors 11 sowie der hierzu vorgesehenen Beschaltung, und auch bezüglich der Leckmessung mittels der Leitung 5, treffen in gleicher Weise auch für den zeitversetzt ausgeführten Schaltertest des Transistors 13 und die Leckmessung über die Leitung 14 zu. Die Schaltertestschaltung enthält auch hier eine Reihenschaltung von Widerständen 19 und 21, die zwischen die bei Durchführung des Tests des Schalters 13 und bei einem Unfall mit Spannung beaufschlagte Leitung 15 und Massepotential 16 geschaltet sind. Der Abgriff 20 zwischen den Widerständen 19 und 21 ist mit dem Gate des Transistors 13 verbunden. Parallel zum Widerstand 19 ist die Kollektor-Emitter-Strecke eines Schalttransistors 18 geschaltet, dessen Gate über eine Leitung 17 von der Steuereinrichtung 1 gesteuert wird. Aufgrund des identischen Schaltungsaufbaus wird zur Vermeidung von Widerholungen auf die vorstehenden Ausführungen hinsichtlich der Funktionsweise und der alternativen Ausgestaltungen verwiesen.

Alternativ ist es auch möglich, einen der beiden elektrisch steuerbaren Schalter 11, 13 durch einen mechanischen Schalter, beispielsweise einen mechanischen Beschleunigungsschalter zu ersetzen, der als Safing-Sensor dient und lediglich bei Auftreten von einen Fahrzeugunfall signalisierenden, hohen Beschleunigüngen anspricht.

## Patentansprüche

1. Verfahren zur Überprüfung eines elektrischen Schaltkreises, der mindestens einen an eine Gleichspannungsquelle angeschlossenen, als Transistor ausgebildeten Schalter (11, 13) und ein mit diesem verbundenes, aktivierbares Schaltungselement (12) enthält, das durch Stromspeisung mit einem oberhalb eines bestimmten Stromwerts liegenden Strom aktivierbar ist, wobei bei der Überprüfung der Funktionsfähigkeit des mindestens einen Schalters (11, 13) der Stromfluß durch den Schalter (11, 13) auch bei einem Funktionsfehler, insbesondere einem Kurzschluß bei dem der nicht mit dem Schalter (11) verbundene Anschluß des aktivierbaren Schaltungselements (12) mit Massepotential verbunden sein sollte, auf einen zur Aktivierung des aktivierbaren Schaltungselements (12) nicht ausreichenden Stromwert begrenzt wird, **dadurch gekennzeichnet, daß** die Gatespannung des Transistors (11, 13) während der Schalterüberprüfung auf einen kleineren Wert als bei einer gewünschten Aktivierung des aktivierbaren Schaltungselements (12) begrenzt wird, und daß bei der Schalterüberprüfung die am Verbindungspunkt zwischen dem Transistor (11, 13) und dem Schaltungselement auftretende Potentialänderung überwacht wird.

2. Verfahren nach Anspruch 1, **dadurch gekennzeichnet, daß** vor oder nach der Schalterüberprüfung eine Leckmessung durchgeführt wird.

3. Vorrichtung zur Überprüfung eines elektrischen Schaltkreises, der mindestens einen an eine Gleichspannungsquelle angeschlossenen, als Transistor ausgebildeten Schalter (11, 13), ein mit diesem verbundenes, aktivierbares Schaltungselement (12), das durch Stromspeisung mit einem oberhalb eines bestimmten Stromwerts liegenden Strom aktivierbar ist, und eine Steuereinrichtung (1) zur Steuerung der Aktivierung des Transistors (11, 13) enthält, wobei bei der Überprüfung der Funktionsfähigkeit des mindestens einen Schalters (11, 13) der durch den Schalter fließende Strom auch bei einem Funktionsfehler, insbesondere einem Kurzschluß, bei dem der nicht mit dem Schalter (11) verbundene Anschluß des aktivierbaren Schaltungselements (12) mit Massepotential verbunden sein sollte, auf einen zur Aktivierung des aktivierbaren Schaltungselements (12) nicht ausreichenden Wert begrenzt ist, **dadurch gekennzeichnet, daß** die Gatespannung des Transistors (11, 13) während der Schalterüberprüfung auf einen kleineren Wert als bei einer gewünschten Aktivierung des aktivierbaren Schaltungselements (12) festgelegt wird, und daß die Steuereinrichtung (1) die am Verbindungspunkt zwischen dem Transistor (11, 13) und dem Schaltungselement (12) überwacht.

4. Vorrichtung nach Anspruch 3, **dadurch gekennzeichnet, daß** das aktivierbare Schaltungselement (12) die Zündpille eines Kraftfahrzeug-Insassenschutzsystems, insbesondere eines Airbag-Systems, ist und der mindestens eine Transistor (11, 13) mit der Zündpille (12) in Reihe geschaltet ist.

5. Vorrichtung nach Anspruch 3 oder 4, **dadurch gekennzeichnet, daß** in die Gateleitung (4, 17) des Transistors (11, 13) ein Strombegrenzungselement (8, 19), insbesondere ein Widerstand, und ein Schaltelement, insbesondere ein Schalttransistor (7, 18), zur Aktivierung und Deaktivierung des Strombegrenzungselements (8, 19) geschaltet sind.

6. Vorrichtung nach einem der Ansprüche 3 bis 5, **dadurch gekennzeichnet, daß** mit dem aktivierbaren Schaltungselement (12) Leitungen (5, 14) zur Durchführung einer Leckmessung verbunden sind.

## Claims

1. Method for checking an electrical circuit which has at least one switch (11, 13) in the form of a transistor, connected to a d.c. voltage source, and an activatable circuit element (12) connected to this, which can be activated by a current supply with a voltage which is above a specified current value, whereby when testing the functional readiness of at least one switch (11, 13) the current flow through the switch (11, 13), including in the event of a functional fault, particularly a short-circuit, during which the terminal of the activatable circuit element (12) not connected to the switch (11) should be connected to frame potential, is limited to a current value which is not sufficient to activate the activatable circuit element (12), **characterised in that** the gate voltage of the transistor (11, 13) is limited during the switch test to a smaller value than that required for activation of the activatable circuit element (12), and that during the switch test the change in potential occurring at the junction between the transistor (11, 13) and the circuit element is monitored.

2. Method according to Claim 1, **characterised in that** a leak measurement is performed before or after the switch test.

3. Device for testing an electrical circuit, which contains at least one switch (11, 13) formed as a transistor and connected to a d.c. voltage source, an activatable circuit element (12) connected to this, which can be activated by a current supply above a specific value, and a control device (1) for control of the activation of the transistor (11, 13), whereby during the test of the functional readiness of at least one switch (11, 13), the current flowing through the switch, including in the event of a functional fault, particularly a short-circuit, during which the terminal of the activatable circuit element (12) not connected to the switch (11) should be connected to frame potential, is limited to a value which is not sufficient to activate the activatable circuit element (12), **characterised in that** the gate voltage of the transistor (11, 13) during the switch test is established at a smaller value than that required for activation of the activatable circuit element (12) and that the control unit (1) monitors the change in potential at the junction between the transistor (11, 13) and the circuit element (12).

4. Device according to Claim 3, **characterised in that** the activatable circuit element (12) is the firing capsule of a vehicle occupant protection system, particularly an airbag system, and that at least one transistor (11, 13) is connected in series with the firing capsule (12).

5. Device according to Claim 3 or 4, **characterised in that** a current limiting element (8, 19), particularly a resistor, and a switch element, particularly a switching transistor (7, 18), is fitted in circuit in the gate line (4, 17) of the transistor (11, 13), for activation and deactivation of the current limiting element (8, 19).

6. Device according to one of Claims 3 to 5, **characterised in that** lines (5, 14) are connected to the activatable circuit element (12) to perform a leak measurement.

## Revendications

1. Procédé pour le contrôle d'un circuit électrique qui comprend au moins un interrupteur (11, 13) constitué par un transistor, connecté à une source de tension continue, et un élément de circuit activable (12) connecté à cet interrupteur, et qui peut être activé par une alimentation électrique avec un courant qui se trouve au-dessous d'une certaine valeur de courant, procédé dans lequel, au cours du contrôle de l'aptitude au fonctionnement de l'au moins un interrupteur (11, 13), le passage de courant à travers l'interrupteur (11, 13) est limité à une valeur de courant qui ne suffit pas pour l'activation de l'élément de circuit activable (12), même dans le cas d'un défaut de fonctionnement, en particulier dans le cas d'un court-circuit, où la connexion de l'élément de circuit activable (12) qui n'est pas connectée à l'interrupteur (11) devrait être connectée à un potentiel de masse, **caractérisé en ce que**, pendant le contrôle de l'interrupteur, la tension de grille du transistor (11, 13) est limitée à une plus faible valeur que lors d'une activation souhaitée de l'élément de circuit activable (12) et **en ce que**, lors du contrôle de l'interrupteur, la variation du potentiel qui se produit au point de jonction entre le transistor (11, 13) et l'élément de circuit est surveillée.

2. Procédé selon la revendication 1, **caractérisé en ce qu'**avant ou après le contrôle de l'interrupteur, on procède à une mesure de fuite.

3. Dispositif pour le contrôle d'un circuit électrique qui comprend au moins un interrupteur (11, 13) constitué par un transistor, connecté à une source de tension continue, et un élément de circuit activable (12) connecté à cet interrupteur, et qui peut être activé par une alimentation électrique avec un courant qui se trouve au-dessous d'une certaine valeur de courant, et un dispositif de commande (1) destiné à commander l'activation du transistor (11, 13), tandis qu'au cours du contrôle de l'aptitude au fonctionnement de l'au moins un interrupteur (11, 13), le courant qui circule à travers l'interrupteur (11, 13) est limité à une valeur de courant qui ne suffit pas pour l'activation de l'élément de circuit activable (12), même dans le cas d'un défaut de fonctionnement, en particulier dans le cas d'un court-circuit, où la connexion de l'élément de circuit activable (12) qui n'est pas connectée à l'interrupteur (11) devrait être connectée à un potentiel de masse, **caractérisé en ce que**, pendant le contrôle de l'interrupteur, la tension de grille du transistor (11, 13) est limitée à une plus faible valeur que lors d'une activation souhaitée de l'élément de circuit activable (12) et **en ce que** le dispositif de commande (1) surveille le point de jonction entre le transistor (11, 13) et l'élément de circuit (12).

4. Dispositif selon la revendication 3, **caractérisé en ce que** l'élément de circuit activable (12) est l'amorce d'un système de protection des occupants d'un véhicule automobile, en particulier d'un système de coussin de sécurité gonflable et l'au moins un transistor (11, 13) est connecté en série avec l'amorce (12).

5. Dispositif selon la revendication 3 ou 4, **caractérisé en ce que** dans la ligne de grille (4, 17) du transistor (11, 13), sont connectés un élément (8, 19) de limitation du courant, en particulier une résistance, et un élément de commutation, en particulier un transistor de commutation (7, 18) destiné à activer et désactiver l'élément (8, 19) de limitation du courant.

6. Dispositif selon une des revendications 3 à 5, **caractérisé en ce que** des lignes (5, 14) destinées à effectuer une mesure de fuite sont connectées avec l'élément de circuit activable (12).
